# EUROPEAN PATENT APPLICATION

(11) **EP 4 533 931 A1**
(43) Date of publication of application: **09.04.2025**
(21) Application number: 23816012.1
(22) Date of filing: 29.05.2023
(51) Int. Cl.: A01B 69/00, G05D 1/02

(54) **SENSING SYSTEM, AGRICULTURAL MACHINE, AND SENSING DEVICE**

(30) Priority: 31.05.2022 JP 2022088213
(71) Applicant: Kubota Corporation, Osaka 556-8601 (JP)
(72) Inventor: CHABATA, Akira, Sakai-shi, Osaka 590-0908 (JP)
(74) Representative: Cabinet Beau de Loménie
(86) International application number: PCT/JP2023/019920
(87) International publication number: WO 2023/234255

(57) **Abstract**

A sensing system includes a first range sensor mounted on a work vehicle, a second range sensor mounted on an implement connected to the work vehicle, a marker member located in a sensing range of the first range sensor, and a processing device. The processing device estimates a pose of the second range sensor relative to the first range sensor based on first sensor data generated by the first range sensor sensing a region including the marker member, and outputs data indicating the estimated pose.

## Description

### TECHNICAL FIELD

The present disclosure relates to sensing systems, agricultural machines, and sensing devices.

### BACKGROUND ART

Research and development of smart agriculture that employs information and communication technology (ICT) and the Internet of things (IoT), as the next-generation agriculture, are under way. Automated and unmanned operations of agricultural machines such as tractors, rice transplanters, and combine harvesters used in fields have been being studied and developed. For example, work vehicles that perform agricultural work while automatically traveling within fields using a positioning system such as a global navigation satellite system (GNSS) that can perform precise positioning have been put into practice.

Meanwhile, work vehicles that automatically travel using a range sensor such as light detection and ranging (LiDAR) have also been being developed. For example, Patent Document 1 describes an example of a work vehicle that recognizes crop rows in a field using a LiDAR sensor, and automatically travels between crop rows. Patent Document 2 describes an example of a work vehicle that automatically travels along a target path set in a field while detecting obstacles using a LiDAR sensor.

### CITATION LIST

### PATENT LITERATURE

Patent Document 1: Japanese Laid-Open Patent Publication No. 2019-154379
Patent Document 2: Japanese Laid-Open Patent Publication No. 2019-170271

### SUMMARY OF INVENTION

### TECHNICAL PROBLEM

In work vehicles that automatically travel while sensing a surrounding environment using a range sensor such as a LiDAR sensor, the sensing may be hampered by an implement connected to the work vehicle. For example, when an implement is connected to the front portion of a work vehicle, blind spots occur in the sensing range in front of the work vehicle, so that the sensing is hampered.

The present disclosure provides techniques for reducing the hampering of sensing due to an implement.

### SOLUTION TO PROBLEM

A sensing system according to an embodiment of the present disclosure includes a first range sensor mounted on a work vehicle, a second range sensor mounted on an implement connected to the work vehicle, a marker member located in a sensing range of the first range sensor, and a processing device. The processing device is configured to estimate a pose of the second range sensor relative to the first range sensor based on first sensor data generated by the first range sensor sensing a region including the marker member, and outputs data indicating the estimated pose.

General or specific aspects of the present disclosure may be implemented using devices, systems, methods, integrated circuits, computer programs, non-transitory computer-readable storage mediua, or any combination thereof. The computer-readable storage media may be inclusive of volatile storage media or non-volatile storage media. The devices may each include a plurality of devices. In the case where the devices each include two or more devices, the two or more devices may be included within a single apparatus, or divided over two or more separate apparatuses.

### ADVANTAGEOUS EFFECTS OF INVENTION

According to the embodiments of the present disclosure, it is possible to avoid the hampering of sensing by an implement.

### BRIEF DESCRIPTION OF DRAWINGS

[FIG. **1**] FIG. **1** is a side view schematically illustrating an agricultural machine according to an illustrative embodiment of the present disclosure.
[FIG. **2**] FIG. **2** is a diagram illustrating an example configuration of a marker member.
[FIG. **3**] FIG. **3** is a diagram for describing a process of estimating a pose of a second LiDAR sensor relative to a first LiDAR sensor.
[FIG. **4**] FIG. **4** is a diagram illustrating another example marker member.
[FIG. **5**] FIG. **5** is a diagram illustrating another example sensing system.
[FIG. **6**] FIG. **6** is a diagram illustrating an example of a marker member having a plurality of portions having different colors.
[FIG. **7**] FIG. **7** is a diagram illustrating still another example sensing system.
[FIG. **8**] FIG. **8** is a diagram for outlining a system according to an illustrative embodiment of the present disclosure.
[FIG. **9**] FIG. **9** is a side view schematically illustrating an example of a work vehicle, and an implement connected to the work vehicle.
[FIG. **10**] FIG. **10** is a block diagram illustrating an example configuration of a work vehicle and an implement.
[FIG. **11**] FIG. **11** is a conceptual diagram illustrating an example of a work vehicle performing positioning based on RTK-GNSS.
[FIG. **12**] FIG. **12** is a diagram schematically illustrating an example of an environment in which a work vehicle travels.
[FIG. **13A**] FIG. **13A** is a diagram schematically illustrating an example travel path of a work vehicle.
[FIG. **13B**] FIG. **13B** is a diagram schematically illustrating another example travel path of a work vehicle.
[FIG. **14**] FIG. **14** is a flowchart illustrating an example operation of steering control during self-driving performed by a controller.
[FIG. **15A**] FIG. **15A** is a diagram illustrating an example of a work vehicle that travels along a target path.
[FIG. **15B**] FIG. **15B** is a diagram illustrating an example of a work vehicle that is located at a position away from and to the right of a target path.
[FIG. **15C**] FIG. **15C** is a diagram illustrating an example of a work vehicle that is located at a position away from and to the left of a target path.
[FIG. **15D**] FIG. **15D** is a diagram illustrating an example of a work vehicle that faces in a direction tilted with respect to a target path.
[FIG. **16**] FIG. **16** is a flowchart illustrating a specific example of a localization process.

### DESCRIPTION OF EMBODIMENTS

### (Definition of terms)

As used herein, the term "work vehicle" refers to a vehicle used to perform work at work sites. The term "work site" refers to any place where work is performed, such as fields, forests, or construction sites. The term "field" refers to any place where agricultural work is performed, such as orchards, cultivated fields, rice fields, grain farms, or pastures. The work vehicle may be an agricultural machine such as a tractor, rice transplanter, combine harvester, vehicle for crop management, or riding mower, or a vehicle used for purposes other than agriculture such as a construction work vehicle or snowplow. In the present disclosure, an implement (also referred to as a "work machine" or "work apparatus") suitable for the type of work can be attached to at least one of the front and back of a work vehicle. The traveling of a work vehicle while performing work is in some cases referred to as "work-traveling."

The term "agricultural machine" refers to a machine for agricultural applications. Examples of agricultural machines include tractors, harvesters, rice transplanters, vehicles for crop management, vegetable transplanters, mowers, seeders, spreaders, and mobile robots for agriculture. Not only may a work vehicle such as a tractor function as an "agricultural machine" alone by itself, but also a combination of a work vehicle and an implement that is attached to, or towed by, the work vehicle may function as an "agricultural machine". For the ground surface inside a field, the agricultural machine performs agricultural work such as tilling, seeding, preventive pest control, manure spreading, planting of crops, or harvesting.

The term "self-driving" means controlling the traveling of a vehicle under the control of a controller, without manual operations performed by the driver. During self-driving, not only the traveling of a vehicle but also work operations (e.g., operations of an implement) may be automatically controlled. The traveling of a vehicle by self-driving is referred to as "automatic traveling." The controller may control at least one of steering required for the traveling of a vehicle, adjustment of traveling speed, and starting and stopping of traveling. When controlling a work vehicle to which an implement is attached, the controller may control operations such as raising and lowering of the implement, and starting and stopping of the operation of the implement. Traveling by self-driving may include not only the traveling of a vehicle along a predetermined path toward a destination, but also the traveling of a vehicle to follow a tracked target. A vehicle that performs self-driving may travel partially based on the user's instructions. A vehicle that performs self-driving may operate in a self-driving mode as well as a manual driving mode in which the vehicle travels according to manual operations performed by the driver. Steering of a vehicle that is not manually performed and is instead performed under the control of the controller is referred to as "automatic steering." All or a portion of the controller may be provided external to the vehicle. Control signals, commands, data, and the like may be exchanged by communication between the vehicle and the controller external to the vehicle. A vehicle that performs self-driving may travel autonomously while sensing a surrounding environment without any human being involved with control of the traveling of the vehicle. A vehicle capable of traveling autonomously can perform unmanned traveling. Such a vehicle may detect and avoid obstacles during autonomous traveling.

The term "range sensor" refers to a sensor that is used to measure distances. The range sensor is configured to measure distances to one or more remote points, and output data indicating the distances, or data indicating the positions of the remote points that have been obtained by converting the distances. Examples of the range sensor include LiDAR sensors, time of flight (TOF) cameras, stereo cameras, or any combinations thereof. The LiDAR sensor emits light (e.g., infrared light or visible light) in order to measure distances. To measure distances, for example, a technique for measuring distances, such as time of flight (TOF) or frequency modulated continuous wave (FMCW), may be used.

The term "environmental map" refers to data representing, with a predetermined coordinate system, the positions or regions of objects existing in an environment in which a work vehicle travels. Examples of the coordinate system that is used to specify an environmental map include not only world coordinate systems such as a geographic coordinate system fixed to the earth, but also odometry coordinate systems that indicate poses based on odometry information. The environmental map may contain, in addition to positions, other information (e.g., attribute information and other information) about objects existing in an environment. Environmental maps include various types of maps, such as point group maps and grid maps.

### (Embodiments)

Hereinafter, embodiments of the present disclosure will be described. Note, however, that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of the claims. In the following description, elements having identical or similar functions are denoted by identical reference numerals.

The following embodiments are only exemplary, and the techniques according to the present disclosure are not limited to the following embodiments. For example, numerical values, shapes, materials, steps, orders of steps, layout of a display screen, etc., which are indicated in the following embodiments are only exemplary, and admit of various modifications so long as it makes technological sense. Any one implementation may be combined with another so long as it makes technological sense to do so.

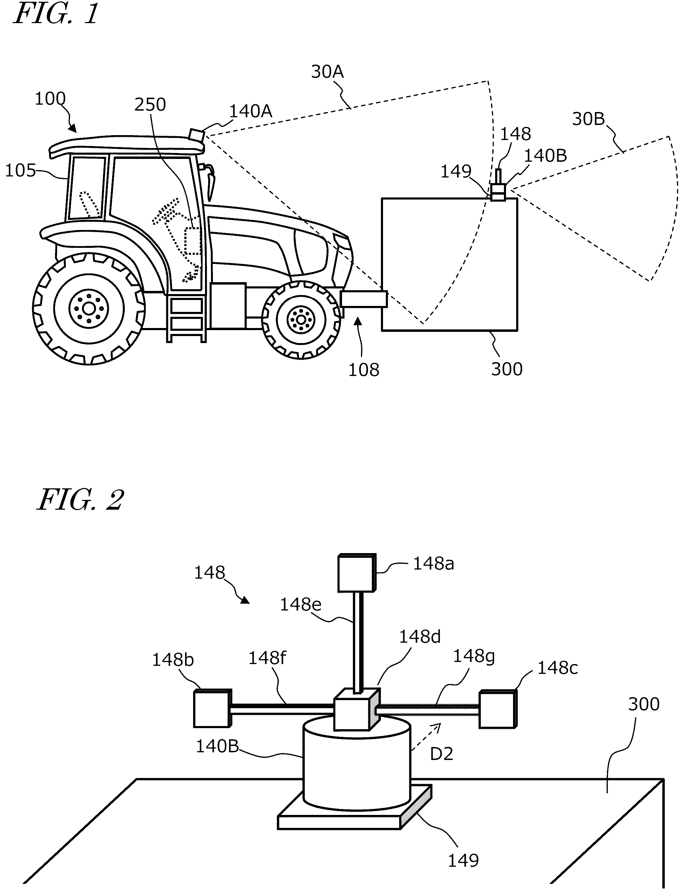

FIG. **1** is a side view schematically illustrating an agricultural machine according to an illustrative embodiment of the present disclosure. The agricultural machine of FIG. **1** includes a work vehicle **100**, and an implement **300** connected to the work vehicle **100**. In this embodiment, the work vehicle **100** is a tractor. The work vehicle **100** includes a linkage device **108** at a front portion thereof. The implement **300** is connected to the front portion of the work vehicle **100** through the linkage device **108**. The work vehicle **100** may have a linkage device to connect an implement at a rear portion thereof. In FIG. **1**, any rear linkage device or rear implement is not illustrated. The implement **300** may be any work machine that performs agricultural work in front of the work vehicle **100**, such as a front loader, harvester, sweeper, or sprayer.

The agricultural machine of FIG. **1** includes a sensing system to sense an environment around the work vehicle **100.** The sensing system may, for example, be used for obstacle detection or localization. The work vehicle **100** may be configured to automatically travel based on the result of localization performed using the sensing system.

The sensing system of this embodiment includes a first LiDAR sensor **140A,** a second LiDAR sensor **140B,** a marker member **148,** and a processing device **250.** The first LiDAR sensor **140A** is an example of a first range sensor. The second LiDAR sensor **140B** is an example of a second range sensor. The first LiDAR sensor **140A** is mounted on the work vehicle **100.** In the example of FIG. **1**, the first LiDAR sensor **140A** is mounted in the vicinity of a front end of an upper portion of a cabin **105** of the work vehicle **100.** The second LiDAR sensor **140B** is mounted on the implement **300.** In the example of FIG. **1****,** the second LiDAR sensor **140B** is mounted in the vicinity of a front end of an upper portion of the implement **300.** The first LiDAR sensor **140A** and the second LiDAR sensor **140B** are mounted at other positions.

The second LiDAR sensor **140B** is external to the implement **300.** The second LiDAR sensor **140B** may, for example, be operated by power supplied from a battery or the implement **300.** The second LiDAR sensor **140B** of FIG. **1** includes a mounting device **149** to mount the second LiDAR sensor **140B** on the implement **300.** The mounting device **149** may, for example, include various parts for mounting the second LiDAR sensor **140B** on the implement **300,** such as a magnet, bolt and nut, screw, or connecting hardware. The mounting device **149** allows the second LiDAR sensor **140B** to be easily mounted on or removed from the implement **300.** The second LiDAR sensor **140B** may be mounted at a position on the implement **300** where there is no obstacle between itself and the first LiDAR sensor **140A,** and there are relatively few blind spots in the front range.

The implement **300** may be provided with a fixing device to fix the second LiDAR sensor **140B.** The fixing device may, for example, have a structure that engages with the mounting device **149** of the second LiDAR sensor **140B.** In that case, when the mounting device **149** is engaged with the fixing device, the second LiDAR sensor **140B** is fixed to the implement **300.**

The second LiDAR sensor **140B** may be mounted on not only the particular implement **300** but also various other implements. Therefore, sensing described below is allowed irrespective of the type of the implement **300.** The second LiDAR sensor **140B,** which is thus external to the implement **300,** can be manufactured or sold separately.

The marker member **148** is arranged in the sensing range of the first LiDAR sensor **140A.** In the example of FIG. **1****,** the marker member **148** is attached to the second LiDAR sensor **140B.** The marker member **148** may be provided on the implement **300** at a position away from the second LiDAR sensor **140B.** A relationship in position and orientation between the marker member **148** and the second LiDAR sensor **140B** is known. Such information may be previously stored in a storage that is internal or external to the processing device **250.** The marker member **148** may, for example, include one or more reflective portions that have a higher reflectance with respect to light emitted from the first LiDAR sensor **140A** than that of the other portion of the marker member **148.**

As illustrated in FIG. **1****,** in the case in which the second LiDAR sensor **140B** is provided on the implement **300** in front of the work vehicle **100,** the first LiDAR sensor **140A** is arranged so as to sense at least an area in front of the work vehicle **100.** The first LiDAR sensor **140A** senses a region including the marker member **148** to generate and output first sensor data. Meanwhile, the second LiDAR sensor **140B** senses an area in front of the implement **300** to generate and output second sensor data. FIG. **1** illustrates a sensing range **30A** of the first LiDAR sensor **140A** and a sensing range **30B** of the second LiDAR sensor **140B,** which are in the shape of a circular sector indicated by a dashed line. The sensing ranges **30A** and **30B** each have a spread not only in the vertical direction but also in the horizontal direction, which becomes broader in the traveling direction of the work vehicle **100.**

The first LiDAR sensor **140A** and the second LiDAR sensor **140B** may each be a scanning sensor that scans a space using, for example, a laser beam to generate information indicating the distribution of objects in the space. A LiDAR sensor may, for example, be configured to measure a distance to a reflection point positioned on the surface of an object using the ToF method. The LiDAR sensor that measures distances using the ToF method emits laser pulses, i.e., a pulsed laser beam, and measures the time that it takes for the laser pulses reflected by an object existing in a surrounding environment to return to the LiDAR sensor. The method for measuring distances is not limited to the ToF method, and may be other methods such as the FMCW method. In the FMCW method, light whose frequency is linearly changed over time is emitted, and a distance is calculated based on the beat frequency of interference light generated by interference between the emitted light and reflected light. Based on the distance and direction of a reflection point, the coordinates of the reflection point in a coordinate system fixed to the work vehicle **100** are calculated. Scanning LiDAR sensors can be divided into two-dimensional LiDAR sensors and three-dimensional LiDAR sensors. A two-dimensional LiDAR sensor may scan an environment by rotating a laser beam in a single plane. Meanwhile, a three-dimensional LiDAR sensor may, for example, scan an environment by rotating a plurality of laser beams along different conical surfaces. The first LiDAR sensor **140A** and the second LiDAR sensor **140B** of FIG. **1** are each a three-dimensional LiDAR sensor, or alternatively, may be a two-dimensional LiDAR sensor.

The first LiDAR sensor **140A** and the second LiDAR sensor **140B** are not limited to a scanning sensor, or may each be a flash sensor that emits light diffusing in a wide range to obtain information about the distribution of distances to objects in a space. Scanning LiDAR sensors use light having an intensity higher than that of flash LiDAR sensors, and therefore, can obtain information about greater distances. Meanwhile, flash LiDAR sensors have a simple structure and can be manufactured at low cost, and therefore, are suitable for applications that do not require strong light.

In this embodiment, in addition to the first LiDAR sensor **140A** mounted on the work vehicle **100,** the second LiDAR sensor **140B** mounted on the implement **300** is provided. If the second LiDAR sensor **140B** is not provided, sensing of an area in front of the implement **300** is obstructed because the implement **300** is positioned in the sensing range of the first LiDAR sensor **140A.** In particular, in the case in which the implement **300** provided in front of the work vehicle **100** has a large size, many blind spots occur in the sensing range of the first LiDAR sensor **140A,** and therefore, data sufficient for obstacle detection or localization cannot be obtained. To address such a problem, in this embodiment the second LiDAR sensor **140B** is externally mounted on the implement **300.** Obstacle detection or localization is performed based on the second sensor data output from the second LiDAR sensor **140B.** The first LiDAR sensor **140A** may be used to estimate the pose of the second LiDAR sensor **140B.** The first sensor data output from the first LiDAR sensor **140A** and the second sensor data output from the second LiDAR sensor **140B** may be combined to generate point cloud data indicating the distribution of objects on the ground around the work vehicle **100.**

The processing device **250** is a computer that processes data output from the first LiDAR sensor **140A** and the second LiDAR sensor **140B.** In the example of FIG. **1****,** the processing device **250** is arranged in the cabin **105** of the work vehicle **100.** The processing device **250** may be implemented as a portion of the controller that controls the operation of the work vehicle **100.** The processing device **250** may, for example, be implemented by an electronic control unit (ECU). The processing device **250** may be arranged not only in the cabin **105** but also at other positions. For example, the processing device **250** may be included in the first LiDAR sensor **140A.** The processing device **250** may be implemented by a plurality of computers or a plurality of circuits. A portion of the functions of the processing device **250** may be implemented by an external computer such as a server located away from the work vehicle **100.**

The processing device **250** may be connected to the first LiDAR sensor **140A** and the second LiDAR sensor **140B** by wireless communication (e.g., Bluetooth (registered trademark) or 4G or 5G communication) or wired communication (e.g., CAN communication). The processing device **250** obtains the first sensor data from the first LiDAR sensor **140A,** and the second sensor data from the second LiDAR sensor **140B.**

The processing device **250** estimates, based on the first sensor data, the pose of the second LiDAR sensor **140B** relative to the first LiDAR sensor **140A.** For example, based on information about the relationship in position and orientation between the second LiDAR sensor **140B** and the marker member **148,** and the first sensor data, the processing device **250** estimates the pose of the second LiDAR sensor **140B** relative to the first LiDAR sensor **140A.** As used herein, the term "pose" refers to a combination of a position and an orientation. In the following description, the pose of the second LiDAR sensor **140B** relative to the first LiDAR sensor **140A** is in some cases simply referred to as "the pose of the second LiDAR sensor **140B."**

The positional relationship between the work vehicle **100** and the implement **300** is not invariable. The pose of the implement **300** relative to the work vehicle **100** may vary depending on the play of the linkage device **108** or the operation of the implement **300** itself. For example, when the work vehicle **100** is traveling, the implement **300** may wobble up and down or from side to side relative to the work vehicle **100.** Due to this, the second LiDAR sensor **140B** may also wobble up and down or from side to side relative to the work vehicle **100.** In order to utilize the second sensor data output from the second LiDAR sensor **140B** in the self-driving of the work vehicle **100,** the second sensor data needs to be converted into data represented in a coordinate system that is fixed to the work vehicle **100.** This coordinateconversion requires information about the pose of the second LiDAR sensor **140B** relative to the first LiDAR sensor **140A** (or the work vehicle **100**). To this end, the processing device **250** estimates the pose of the second LiDAR sensor **140B** relative to the first LiDAR sensor **140A** based on the first sensor data generated by the first LiDAR sensor **140A** sensing a region including the marker member **148.**

The processing device **250** can estimate the pose of the second LiDAR sensor **140B** relative to the first LiDAR sensor **140A** based on the position and/or shape of one or more reflective portions of the marker member **148.** A specific example of this process will be described below.

FIG. **2** is a diagram illustrating an example configuration of the marker member **148.** In this example, the marker member **148** has three reflective portions **148a, 148b,** and **148c.** The reflective portions **148a, 148b,** and **148c** each have, for example, a reflective surface on which a reflective material such as reflective tape that reflects light emitted from the first LiDAR sensor **140A** with a high reflectance is provided. The marker member **148** may be arranged such that the reflective surface of each of the reflective portions **148a, 148b,** and **148c** faces toward the first LiDAR sensor **140A.** For example, the marker member **148** may be arranged such that the direction of a line normal to the reflective surface of each of the reflective portions **148a, 148b,** and **148c** is close to the direction of the first LiDAR sensor **140A.** A retroreflective material (e.g., retroreflective tape) may be provided on the reflective surface of each of the reflective portions **148a, 148b,** and **148c.** If the retroreflective material is used, a light beam emitted from the light-emitting unit of the first LiDAR sensor **140A** can be reflected toward a light-receiving unit of the first LiDAR sensor **140A.** The reflective surface of each of the reflective portions **148a, 148b,** and **148c** has a two-dimensional spread, and may, for example, has a size of greater than 10 mm × 10 mm. The reflective surface of each of the reflective portions **148a, 148b,** and **148c** may have a size of greater than 30 mm × 30 mm. As the size of the reflective surface increases, it is easier to detect the reflective portions **148a, 148b,** and **148c** based on the first sensor data.

FIG. **2** illustrates three reflective portions **148a, 148b,** and **148c,** which are supported by three support posts **148e, 148f,** and **148g,** respectively, extending three directions from a base portion **148d** at a middle of the marker member **148.** The three support posts **148e, 148f,** and **148g** are arranged in a plane perpendicular to a front direction **D2** of the second LiDAR sensor **140B.** The three support posts **148e, 148f,** and **148g** extend in the plane in different directions separated from each other by 90 degrees. The support posts **148f** and **148g** extend leftward and rightward, respectively, with respect to the front direction **D2** of the second LiDAR sensor **140B.** The support post **148e** extends vertically upward. In the example of FIG. **2****,** the support posts **148e, 148f,** and **148g** have equal lengths. The three reflective portions **148a, 148b,** and **148c** are provided at the tips of the three support posts **148e, 148f,** and **148g,** respectively. Thus, the reflective portions **148a, 148b,** and **148c** are provided at positions separated from each other in the three directions, i.e., leftward, rightward, and vertical directions, with respect to the base portion **148d.** Such an arrangement facilitates estimation of the pose of the second LiDAR sensor **140B.** It should be noted that the positional relationship between the three reflective portions **148a, 148b,** and **148c** is not limited to the illustrated relationship and may be changed as appropriate.

The first LiDAR sensor **140A** performs beam scanning in a region including the three reflective portions **148a, 148b,** and **148c** to generate the first sensor data indicating a distance distribution or position distribution of objects in the region. Based on the first sensor data, the processing device **250** determines the positions of the three reflective portions **148a, 148b,** and **148c.** In the example of FIG. **2****,** the reflective portions **148a, 148b,** and **148c** each have a rectangular shape, and may have other shapes. For example, the shape of each of the reflective portions **148a, 148b,** and **148c** may be elliptical, perfect circular, triangular, or other polygonal, or characteristic shapes such as a star shape or cross shape. The reflective portions **148a, 148b,** and **148c** may have different shapes. The processing device **250** estimates the pose of the second LiDAR sensor **140B** relative to the first LiDAR sensor **140A** based on the estimated positions of the reflective portions **148a, 148b,** and **148c.**

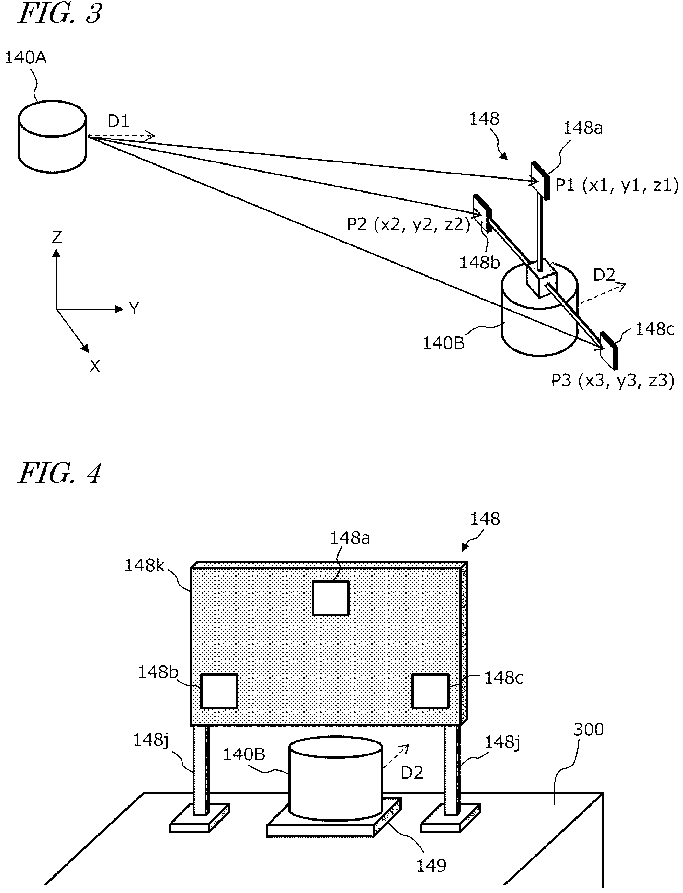

FIG. **3** is a diagram for describing a process of estimating the pose of the second LiDAR sensor **140B** relative to the first LiDAR sensor **140A.** FIG. **3** illustrates three light beams traveling from the first LiDAR sensor **140A** toward the three reflective portions **148a, 148b,** and **148c** by solid line arrows. In this example, the first LiDAR sensor **140A** performs beam scanning around the front direction **D1** to measure distances to reflection points of objects existing in a region including the three reflective portions **148a, 148b,** and **148c.** Based on the distances and directions of the reflection points, the first LiDAR sensor **140A** can generate, as the first sensor data, point cloud data including information about the three-dimensional coordinate values of the reflection points in a first sensor coordinate system fixed to the first LiDAR sensor **140A.** The first sensor coordinate system is also fixed to the work vehicle **100.** FIG. **3** illustrates X, Y, and Z axes that are orthogonal to each other and that define the first sensor coordinate system. The first sensor data may, for example, be point cloud data indicating the correspondence between the identification numbers of a plurality of reflection points for which reflected light is detected, and the coordinate values (x, y, z) of the reflection points. The first sensor data may include information about the luminances of the reflection points.

The processing device **250** retrieves some reflection points corresponding to the three reflective portions **148a, 148b,** and **148c** from a plurality of reflection points indicated by the first sensor data output from the first LiDAR sensor **140A.** For example, the processing device **250** may perform clustering on the point cloud indicated by the first sensor data based on point-to-point distances, and retrieves three clusters that are estimated to indicate the actual positional relationship and shapes of the reflective portions **148a, 148b,** and **148c,** as reflection points corresponding to the reflective portions **148a, 148b,** and **148c.** Alternatively, if the first sensor data includes information about the luminance of each reflection point, some reflection points constituting three clusters close to each other, of reflection points whose luminances exceed a threshold, may be retrieved as reflection points corresponding to the three reflective portions **148a, 148b,** and **148c.**

The processing device **250** determines a representative position of each of the reflective portions **148a, 148b,** and **148c** based on the coordinate values of the plurality of retrieved reflection points corresponding to the reflective portions **148a, 148b,** and **148c.** The representative position of each reflective portion may, for example, be the average value or middle value of the positions of the plurality of reflection points corresponding to the reflective portion. The representative position of each reflective portion is hereinafter referred to as the "position" of the reflective portion.

In the example of FIG. **3****,** a relationship between the positions of the three reflective portions **148a, 148b,** and **148c,** and a reference position (e.g., the position of a point from which the beam is emitted) of the second LiDAR sensor **140B** and the front direction **D2** of the second LiDAR sensor **140B,** is known, and data indicating the relationship is previously stored in the storage. The processing device **250** determines the reference position of the second LiDAR sensor **140B** and the front direction **D2** in the first sensor coordinate system based on the data indicating the relationship, and the positions of the three reflective portions **148a, 148b,** and **148c** determined based on the first sensor data.

As illustrated in FIG. **3****,** it is assumed that the positions of the three reflective portions **148a, 148b,** and **148c** in the first sensor coordinate system have been determined to be **P1** (x1, y1, z1), **P2** (x2, y2, z2), and **P3** (x3, y3, z3), respectively. In this case, the processing device **250** can, for example, determine the reference position of the second LiDAR sensor **140B** and the front direction **D2** in the first sensor coordinate system using a method described below.

Initially, the processing device **250** calculates and determines the position of the median point of the triangle formed by the positions **P1, P2,** and **P3** of the three reflective portions **148a, 148b,** and **148c** determined based on the first sensor data, and the vector normal to the plane including the positions **P1, P2,** and **P3.** The processing device **250** determines a position that is located at a predetermined distance away from the determined median point of the triangle in a predetermined direction (e.g., the direction of a vector from the point **P1** toward the median point) as the reference position of the second LiDAR sensor **140B.** The processing device **250** also determines the direction of the determined vector normal to the plane as the front direction **D2** of the second LiDAR sensor **140B.** As a result, the processing device **250** can estimate the position and orientation angles (roll, pitch, and yaw) of the second LiDAR sensor **140B.** It should be noted that the method for estimating the pose of the second LiDAR sensor **140B** depends on a relationship in relative position and orientation between the second LiDAR sensor **140B** and the marker member **148.** For example, if the direction of the line normal to the plane including the three points **P1, P2,** and **P3** of the marker member **148** deviates from the front direction **D2** of the second LiDAR sensor **140B,** the pose of the second LiDAR sensor **140B** relative to the first LiDAR sensor **140A** is estimated, taking the deviation into account.

The marker member **148** may be provided at a position away from the second LiDAR sensor **140B.** The positional relationship between the marker member **148** and the second LiDAR sensor **140B,** and the sizes of the reflective portions, may be adjusted as appropriate. If the first LiDAR sensor **140A** and the second LiDAR sensor **140B** are located too far away from each other, it may be difficult to detect the reflective portions. Conversely, if the first LiDAR sensor **140A** and the second LiDAR sensor **140B** are too close to each other, the reflective portions may be located out of the detection range of the first LiDAR sensor **140A.** In such cases, by changing the distance between the marker member **148** and the second LiDAR sensor **140B** or the sizes of the reflective portions, the reflective portions can be appropriately detected.

FIG. **4** is a diagram illustrating another example of the marker member **148.** In this example, the marker member **148** is mounted on the implement **300** separately from the second LiDAR sensor **140B.** The marker member **148** of FIG. **4** has a flat plate **148k** supported by two support posts **148j.** The three reflective portions **148a, 148b,** and **148c** are provided on the flat plate **148k.** On the reflective portions **148a, 148b,** and **148c,** provided is a reflective material (e.g., a retroreflective material) having a higher reflectance with respect to light emitted from the first LiDAR sensor **140A** than (e.g., at least two times as high as) that of the flat plate **148k** and the support post **148j.** The position of the marker member **148** can be changed as appropriate. Even in the case in which the marker member **148** thus configured is used, the pose of the second LiDAR sensor **140B** can be estimated by a process similar to that of the example of FIG. **3****.**

As described above, in this embodiment, the processing device **250** recognizes the three reflective portions **148a, 148b,** and **148c** of the marker member **148** provided in the vicinity of the second LiDAR sensor **140B** based on the first sensor data output from the first LiDAR sensor **140A.** The processing device **250** estimates the pose of the second LiDAR sensor **140B** in a coordinate system fixed to the first LiDAR sensor **140A** and the work vehicle **100** based on the recognized positions of the three reflective portions **148a, 148b,** and **148c.** The processing device **250** outputs data indicating the estimated pose of the second LiDAR sensor **140B.** For example, the processing device **250** may output and store the data indicating the pose of the second LiDAR sensor **140B** to the storage. Alternatively, the processing device **250** may transmit the data indicating the pose of the second LiDAR sensor **140B** to an external computer.

The processing device **250** may be configured to convert the second sensor data output from the second LiDAR sensor **140B** into data represented in a vehicle coordinate system fixed to the work vehicle **100** based on the estimated pose of the second LiDAR sensor **140B,** and output the resultant data. For example, the processing device **250** may perform the coordinate conversion by performing a matrix operation for translating and rotating the coordinate values of the reflection points in the second sensor data based on the estimate position and orientation angles of the second LiDAR sensor **140B.** The processing device **250** can generate point cloud data in the vehicle coordinate system by such coordinate conversion. The processing device **250** may generate combined point cloud data using not only the second sensor data but also the first sensor data. For example, the processing device **250** may convert the second sensor data into data represented in the vehicle coordinate system based on the estimated pose of the second LiDAR sensor **140B,** and generate and output point cloud data based on the first sensor data and the converted second sensor data.

Concerning the first LiDAR sensor **140A,** calibration has been performed previously (e.g., in a factory prior to shipment), and the relationship in position and orientation between the work vehicle **100** and the first LiDAR sensor **140A** is known. Based on the known relationship, the processing device **250** can convert the first sensor data represented by the first sensor coordinate system into data represented by the vehicle coordinate system. Alternatively, the processing device **250** may process the first sensor coordinate system as the vehicle coordinate system. In that case, the process of coordinate conversion of the first sensor data is not required.

The processing device **250** can generate point cloud data by combining the first sensor data represented by the vehicle coordinate system and the second sensor data. In this case, the processing device **250** may combine data obtained by excluding, from the first sensor data, data of regions corresponding to the implement **300,** the second LiDAR sensor **140B,** and the marker member **148,** with the converted second sensor data, to generate point cloud data. The shapes of the implement **300,** the second LiDAR sensor **140B,** and the marker member **148,** and the positional relationship between the implement **300,** the second LiDAR sensor **140B,** and the marker member **148,** and the first LiDAR sensor **140A,** are known. Based on the known positional relationship, the processing device **250** can determine and exclude, from the first sensor data, data of regions corresponding to the implement **300,** the second LiDAR sensor **140B,** and the marker member **148.** By such a process, combined point cloud data from which a point cloud corresponding to the implement **300,** the second LiDAR sensor **140B,** and the marker member **148,** which is not required for the automatic operation, has been excluded can be generated.

In this embodiment, the processing device **250** itself generates point cloud data based on the first sensor data and the second sensor data. Alternatively, another computer may instead generate the point cloud data. In that case, the processing device **250** transmits data indicating the estimated pose of the second LiDAR sensor **140B,** and the second sensor data (and, in some cases, the first sensor data), to the second computer. The second computer can generate point cloud data indicating the distribution of objects on the ground around the work vehicle **100** based on the data received from the processing device **250.**

In this embodiment, the second LiDAR sensor **140B** transmits the generated second sensor data to the processing device **250** by, for example, wireless communication. The second LiDAR sensor **140B** may optionally perform downsampling on the second sensor data, and transmit the second sensor data whose data amount has been compressed to the processing device **250.** This also holds true for the first LiDAR sensor **140A.**

The sensing system of this embodiment may further include a storage that stores an environmental map. The storage may be internal or external to the processing device **250.** The environmental map represents the positions or regions of objects existing in an environment in which the work vehicle **100** travels using a predetermined coordinate system. The processing device **250** is configured to perform localization on the work vehicle **100** by the following steps (S1)-(S4).
(S1) Estimating the pose of the second LiDAR sensor **140B** by the above process based on the first sensor data.
(S2) Converting, based on the estimated pose, the second sensor data into data represented by the vehicle coordinate system.
(S3) Generating, based on the converted second sensor data, point cloud data indicating the distribution of objects on the ground around the work vehicle **100,** wherein the generation of the point cloud data may also be based on first sensor data.
(S4) Estimating the pose of the work vehicle **100** by performing matching between the point cloud data and the environmental map.

The processing device **250** may be configured to repeatedly perform the steps (S1)-(S4) while the work vehicle **100** is traveling, to estimate the pose of the work vehicle **100** at short time intervals (e.g., at least once per second). The processing device **250** may transmit data indicating the estimated pose of the work vehicle **100** to the controller that controls the automatic traveling of the work vehicle **100.** The controller may control steering and speed based on the estimated pose of the work vehicle **100** and a preset target path. As a result, the automatic traveling of the work vehicle **100** can be embodied.

In the above example, the pose of the second LiDAR sensor **140B** is estimated based on the first sensor data output from the first LiDAR sensor **140A.** Instead of this configuration, the pose of the second LiDAR sensor **140B** may be estimated using other types of sensing devices.

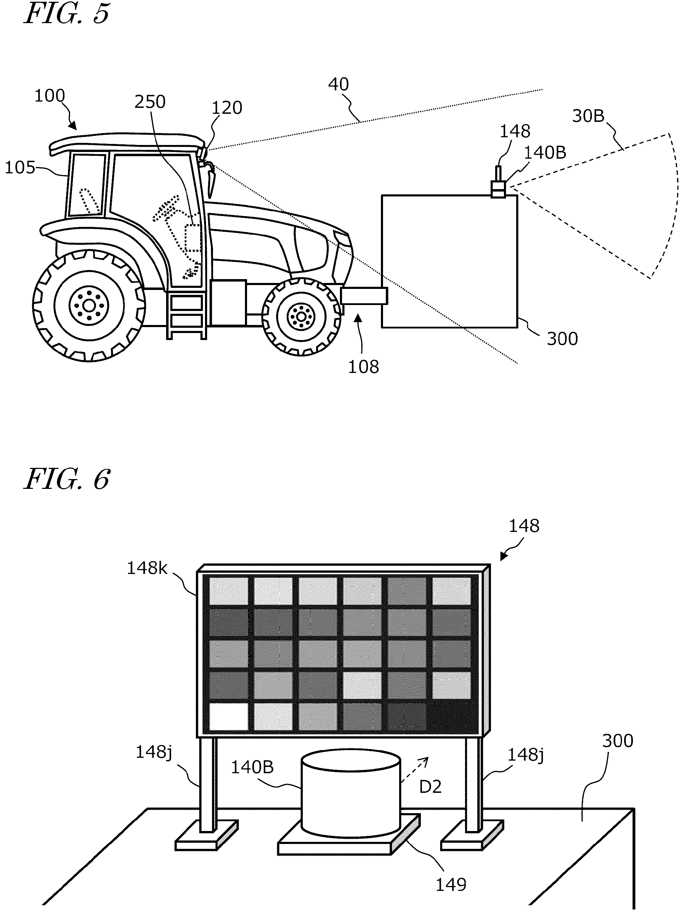

FIG. **5** is a diagram illustrating another example sensing system. In the example of FIG. **5**, a camera **120** is provided instead of the first LiDAR sensor **140A** of FIG. **1****.** The camera **120** includes an image sensor to output image data as first sensor data. In this example, the camera **120** or the image sensor serves as a first range sensor. FIG. **5** illustrates an imaging range **40** of the camera **120** with a dotted line. In this example, a marker member **148** has a characteristic luminance distribution or color distribution. The processing device **250** estimates the pose of the LiDAR sensor **140B** relative to the camera **120** based on the luminance distribution or color distribution of a region corresponding to the marker member **148** in the image indicated by the first sensor data. For example, in the case in which the marker member **148** includes three reflective portions **148a, 148b,** and **148c** such as those illustrated in FIG. **4****,** distances to the reflective portions **148a, 148b,** and **148c** can be estimated from the sizes of the reflective portions **148a, 148b,** and **148c,** respectively, recognized from the image data. Based on the estimated distances to the reflective portions **148a, 148b,** and **148c,** the processing device **250** can estimate the position and orientation angles of the LiDAR sensor **140B** as viewed from the camera **120.**

The marker member **148** may include a plurality of portions (e.g., at least three portions) with different colors instead of the reflective portions **148a, 148b,** and **148c,** which have a high light reflectance. FIG. **6** is a diagram illustrating an example of the marker member **148** including a plurality of portions with different colors. In FIG. **6****,** the marker member **148** includes a flat plate **148k** on which a color chart having a plurality of portions having different colors is provided. The processing device **250** can estimate distances to the portions based on the sizes and positional relationship of the plurality of portions having different colors in an image generated by the camera **120** imaging a scene including the marker member **148.** The processing device **250** can estimate the pose of the second LiDAR sensor **140B** based on the distances to the portions.

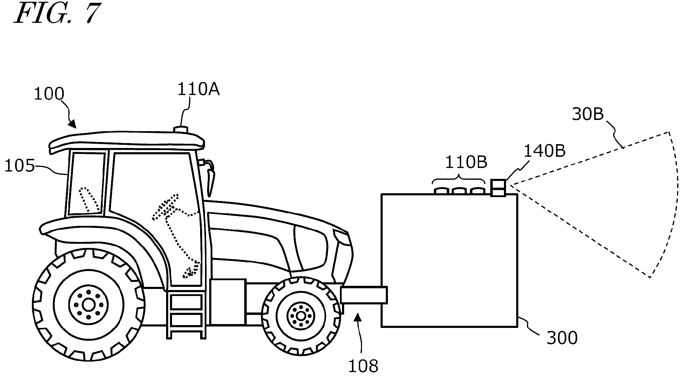

FIG. **7** is a diagram illustrating still another example sensing system. In the example of FIG. **7****,** the work vehicle **100** is provided with a first GNSS receiver **110A.** The implement **300** is provided with at least three second GNN receivers **110B** and a LiDAR sensor **140B.** The work vehicle **100** is not provided with a LiDAR sensor.

The first GNSS receiver **110A** is provided at an upper portion of the cabin **105.** The second GNN receiver **110B** is arranged on the implement **300** around the LiDAR sensor **140B** with a space therebetween. The GNN receivers **110A** and **110B** may each be provided at a position different from that of FIG. **7****.** The GNN receivers **110A** and **110B** may each include an antenna that receives signals from GNSS satellites, and a processor that calculates its own position based on the signals received by the antenna. The GNN receivers **110A** and **110B** each receive satellite signals transmitted from a plurality of GNSS satellites, and perform positioning based on the satellite signals. GNSS collectively refers to satellite-based positioning systems, such as the global positioning system (GPS), the quasi-zenith satellite system (QZSS, for example, Michibiki), GLONASS, Galileo, and BeiDou.

The processing device **250** may be connected to each of the GNN receivers **110A** and **110B** by wireless or wired communication. The processing device **250** estimates the pose of the LiDAR sensor **140B** relative to the first GNSS receiver **110A** based on satellite signals received from the first GNSS receiver **110A** and satellite signals received by the at least three second GNN receivers **110B.** For example, the processing device **250** can calculate the position of each second GNN receiver **110B** relative to the first GNSS receiver **110A** by performing moving baseline processing where the first GNSS receiver **110A** is a moving base, and the plurality of second GNN receiver **110B** are a rover. A positional relationship between each second GNN receiver **110B** and the LiDAR sensor **140B** is known, and data indicating the positional relationship is stored in a storage. The processing device **250** can estimate the pose of the second LiDAR sensor **140B** based on the calculated position of each second GNN receiver **110B** and the known positional relationship between each second GNN receiver **110B** and the LiDAR sensor **140B.** It should be noted that the above process executed by the processing device **250** may be executed by a processor included in the first GNSS receiver **110A.**

### Example of work vehicle performing automatic traveling

Next, a more specific example in which the work vehicle **100** automatically travels while performing localization using a sensing system will be described.

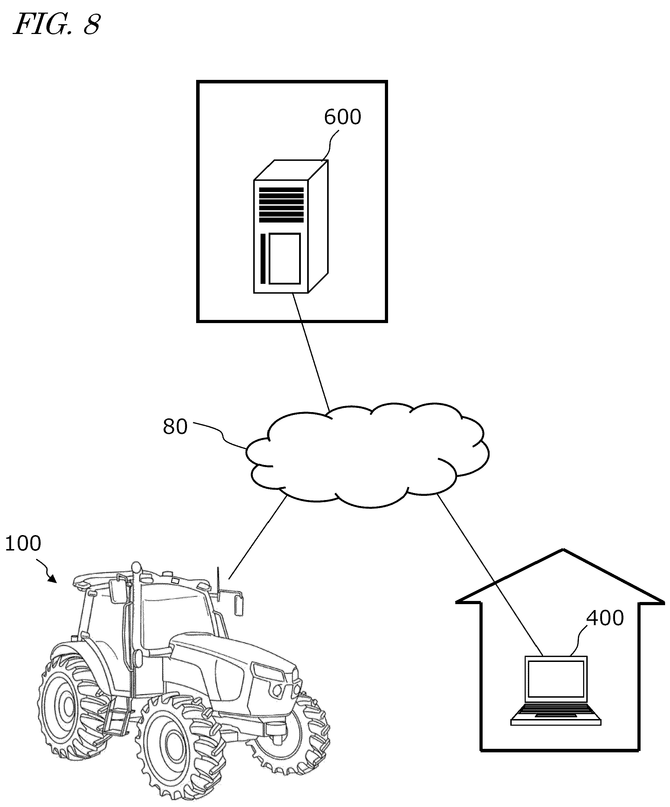

FIG. **8** is a diagram for outlining a system according to an illustrative embodiment of the present disclosure. The system of FIG. **8** includes a work vehicle **100,** a terminal device **400,** and a management device **600.** The terminal device **400** is a computer used by a user who remotely monitors the work vehicle **100.** The management device **600** is a computer managed by an entity running the system. The work vehicle **100,** the terminal device **400,** and the management device **600** can communicate with each other through a network **80.** Although FIG. **8** illustrates a single work vehicle **100,** the system may include a plurality of work vehicles or other agricultural machines.

The work vehicle **100** according to the present embodiment is a tractor. The work vehicle **100** can have an implement attached to its rear and/or its front. While performing agricultural work in accordance with a particular type of implement, the work vehicle **100** is able to travel inside a field. The work vehicle **100** may travel inside the field or outside the field with no implement being attached thereto.

The work vehicle **100** has a self-driving function. In other words, the work vehicle **100** can travel by the action of a controller, rather than manually. The controller according to the present embodiment is provided inside the work vehicle **100,** and is able to control both the speed and steering of the work vehicle **100.** The work vehicle **100** can perform self-traveling outside the field (e.g., on roads) as well as inside the field.

The work vehicle **100** includes a device usable for positioning or localization, such as a GNSS receiver or an LiDAR sensor. Based on the position of the work vehicle **100** and information on a target path, the controller of the work vehicle **100** causes the work vehicle **100** to automatically travel. In addition to controlling the travel of the work vehicle **100**, the controller also controls the operation of the implement. As a result, while automatically traveling inside the field, the work vehicle **100** is able to perform agricultural work by using the implement. In addition, the work vehicle **100** is able to automatically travel along the target path on a road outside the field (e.g., an agricultural road or a general road). In the case of performing self-traveling on a road outside the field, the work vehicle **100** travels while generating, along the target path, a local path along which the work vehicle **100** can avoid an obstacle, based on data output from a sensing device such as a camera or a LiDAR sensor. Inside the field, the work vehicle **100** may travel while generating a local path in substantially the same manner as described above, or may perform an operation of traveling along the target path without generating a local path and halting when an obstacle is detected.

The management device **600** is a computer to manage the agricultural work performed by the work vehicle **100**. The management device **600** may be, for example, a server computer that performs centralized management on information regarding the field on the cloud and supports agriculture by use of the data on the cloud. The management device **600,** for example, creates a work plan for the work vehicle **100** and performs path planning for the work vehicle **100** in accordance with the work plan. The management device **600** may further generate or edit an environment map based on data collected by the work vehicle **100** or any other movable body by use of the sensing device such as a LiDAR sensor. The management device **600** transmits data on the work plan, the target path and the environment map thus generated to the work vehicle **100.** The work vehicle **100** automatically moves and performs agricultural work based on the data.

The terminal device **400** is a computer that is used by a user who is located away from the work vehicle **100.** The terminal device **400** is used to remotely monitor the work vehicle **100** or remotely operate the work vehicle **100.** For example, the terminal device **400** can display, on a display device, video captured by at least one camera (imaging device) provided in the work vehicle **100.** The user can check a situation around the work vehicle **100** by viewing the video, and sends a stop or start instruction to the work vehicle **100.**

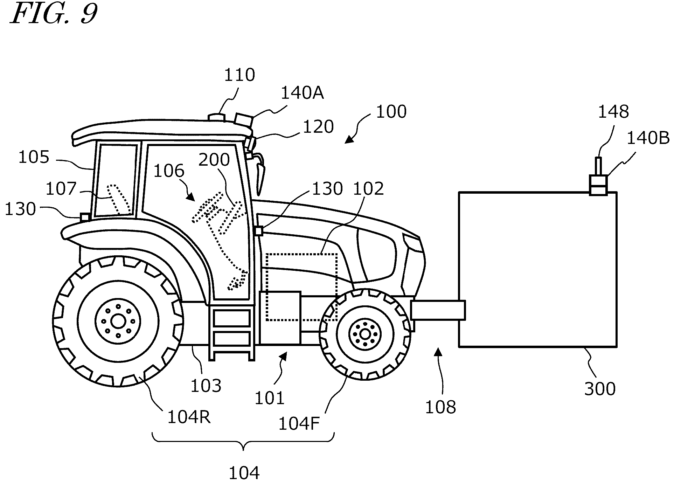

FIG. **9** is a side view schematically showing an example of the work vehicle **100** and an example of implement **300** linked to the work vehicle **100.** The work vehicle **100** according to the present embodiment can operate both in a manual driving mode and a self-driving mode. In the self-driving mode, the work vehicle **100** is able to perform unmanned travel.

The work vehicle **100** of FIG. **9** includes a vehicle body **101,** a prime mover (engine) **102,** and a transmission **103.** The vehicle body **101** is provided with tire-mounted wheels **104** and a cabin **105.** The wheels **104** include a pair of front wheels **104F** and a pair of rear wheels **104R.** In the cabin **105,** a driver's seat **107,** a steering device **106,** an operation terminal **200,** and switches for operations are provided. One or both of the front wheel **104F** and the rear wheel **104R** may be replaced with a plurality of wheels to which a continuous track is attached (crawler) instead of a tire-mounted wheel.

The work vehicle **100** includes a plurality of sensing devices that sense surroundings of the work vehicle **100.** In the example of FIG. **9****,** the sensing devices include a camera **120,** a first LiDAR sensor **140A,** and a plurality of obstacle sensors **130.** A second LiDAR sensor **140B** and a marker member **148** are mounted on an implement **300.**

The camera **120** captures an image of an environment around the work vehicle **100** to generate image data. The work vehicle **100** may be provided with a plurality of cameras **120.** An image obtained by the camera **120** may be transmitted to the terminal device **400,** which performs remote monitoring. The image may be used to monitor the work vehicle **100** during unmanned driving. The camera **120** may also be used to generate images for recognizing surrounding objects or obstacles on the ground, white lines, signs, displays, and the like when the work vehicle **100** travels on roads (agricultural roads or general roads) outsides the field.

The first LiDAR sensor **140A** is arranged on the cabin **105.** The second LiDAR sensor **140B** is arranged on the implement **300.** The first LiDAR sensor **140A** and the second LiDAR sensor **140B** may each be provided at a position different from that illustrated in the figures. The first LiDAR sensor **140A** and the second LiDAR sensor **140B** each repeatedly output first sensor data indicating distances to and directions of measurement points of objects existing in a surrounding environment, or the two-dimensional or three-dimensional coordinate values of the measurement points, while the work vehicle **100** is traveling.

The first sensor data output from the first LiDAR sensor **140A** and the second sensor data output from the second LiDAR sensor **140B** are processed by a processing device in the work vehicle **100.** The processing device estimates the pose of the second LiDAR sensor **140B** relative to the first LiDAR sensor **140A** based on the first sensor data generated by the first LiDAR sensor **140A** sensing a region including the marker member **148.** The processing device converts the second sensor data into data represented by a vehicle coordinate system fixed to the work vehicle **100,** based on the estimated pose of the second LiDAR sensor **140B.** Based on the converted second sensor data, or by combining the converted the converted second sensor data with the first sensor data, the processing device generates point cloud data in the vehicle coordinate system. The processing device can perform localization on the work vehicle **100** by performing matching between the point cloud data and an environmental map. The processing device can also, for example, generate or edit an environmental map using an algorithm such as simultaneous localization and mapping (SLAM). The work vehicle **100** and the implement **300** may include a plurality of LiDAR sensors arranged at different positions and different orientations.

The plurality of obstacle sensors **130** shown in FIG. **9** are provided at the front and the rear of the cabin **105.** The obstacle sensors **130** may be disposed at other positions. For example, one or more obstacle sensors **130** may be disposed at any position at the sides, the front or the rear of the vehicle body **101.** The obstacle sensors **130** may include, for example, a laser scanner or an ultrasonic sonar. The obstacle sensors **130** may be used to detect obstacles in the surroundings of the work vehicle **100** during self-traveling to cause the work vehicle **100** to halt or detour around the obstacles. The LiDAR sensor **140** may be used as one of the obstacle sensors **130.**

The work vehicle **100** further includes a GNSS unit **110.** The GNSS unit **110** includes a GNSS receiver. The GNSS receiver may include an antenna to receive a signal(s) from a GNSS satellite(s) and a processor to calculate the position of the work vehicle **100** based on the signal(s) received by the antenna. The GNSS unit **110** receives satellite signals transmitted from the plurality of GNSS satellites, and performs positioning based on the satellite signals. Although the GNSS unit **110** according to the present embodiment is disposed above the cabin **105,** it may be disposed at any other position.

The GNSS unit **110** may include an inertial measurement unit (IMU). Signals from the IMU can be used to complement position data. The IMU can measure a tilt or a small motion of the work vehicle **100.** The data acquired by the IMU can be used to complement the position data based on the satellite signals, so as to improve the performance of positioning.

The controller of the work vehicle **100** may utilize, for positioning, the sensing data acquired by the sensing devices such as the cameras **120** or the LIDAR sensor **140,** in addition to the positioning results provided by the GNSS unit **110.** In the case where objects serving as characteristic points exist in the environment that is traveled by the work vehicle **100,** as in the case of an agricultural road, a forest road, a general road or an orchard, the position and the orientation of the work vehicle **100** can be estimated with a high accuracy based on data that is acquired by the cameras **120** or the LiDAR sensor **140** and on an environment map that is previously stored in the storage. By correcting or complementing position data based on the satellite signals using the data acquired by the cameras **120** or the LiDAR sensor **140,** it becomes possible to identify the position of the work vehicle **100** with a higher accuracy.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force to change the steering angle of the front wheels **104F.** When automatic steering is performed, under the control of the controller disposed in the work vehicle **100,** the steering angle may be automatically adjusted by the power of the hydraulic device or the electric motor.

A linkage device **108** is provided at the front of the vehicle body **101.** The linkage device **108** may include, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the work vehicle **100.** The linkage device **108** is able to raise or lower the three-point link with a hydraulic device, for example, thus changing the position and/or attitude of the implement **300.** Moreover, motive power can be sent from the work vehicle **100** to the implement **300** via the universal joint. The linkage device may also be provided at a rear portion of the vehicle body **101.** In that case, an implement can be connected at the back of the work vehicle **100.**

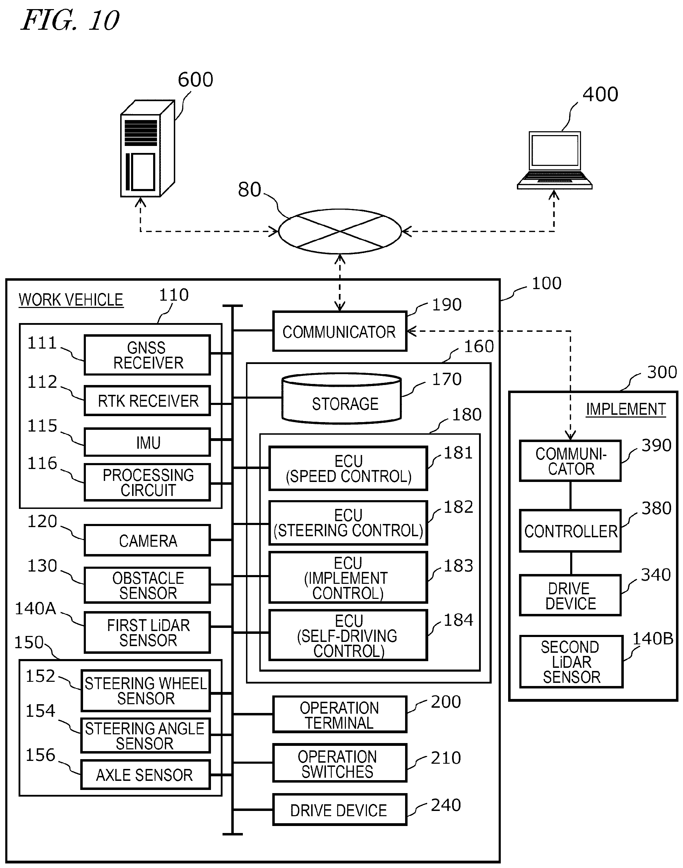

FIG. **10** is a block diagram showing an example configuration of the work vehicle **100** and the implement **300.** The work vehicle **100** and the implement **300** can communicate with each other via a communication cable that is included in the linkage device **108.** The work vehicle **100** is able to communicate with the terminal device **400** and the management device **600** via the network **80.**

In addition to the GNSS unit **110,** the cameras **120,** the obstacle sensors **130,** the first LiDAR sensor **140A** and the operation terminal **200,** the work vehicle **100** in the example of FIG. **10** includes sensors **150** to detect the operating status of the work vehicle **100,** a control system **160,** a communicator **190,** operation switches **210,** and a drive device **240.** These component elements are communicably connected to each other via a bus. The GNSS unit **110** includes a GNSS receiver **111,** an RTK receiver **112,** an inertial measurement unit (IMU) **115,** and a processing circuit **116.** The sensors **150** include a steering wheel sensor **152,** an steering angle sensor **154,** and a wheel axis sensor **156.** The control system **160** includes a storage **170** and a controller **180.** The controller **180** includes a plurality of electronic control units (ECU) **181** to **184.** The implement **300** includes a drive device **340,** a controller **380,** a communicator **390,** and a second LiDAR sensor **140B.** Note that FIG. **10** shows component elements which are relatively closely related to the operations of self-driving by the work vehicle **100,** while other components are omitted from illustration.

The GNSS receiver **111** in the GNSS unit **110** receives satellite signals transmitted from the plurality of GNSS satellites and generates GNSS data based on the satellite signals. The GNSS data is generated in a predetermined format such as, for example, the NMEA-0183 format. The GNSS data may include, for example, the identification number, the angle of elevation, the angle of direction, and a value representing the reception strength of each of the satellites from which the satellite signals are received.

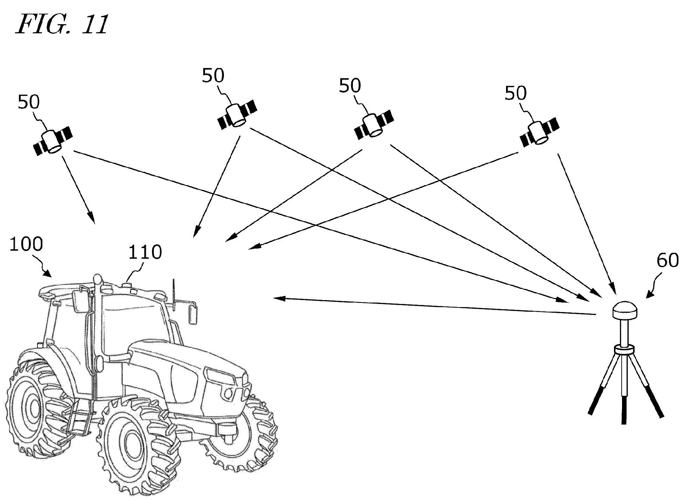

The GNSS unit **110** shown in FIG. **10** may be configured to perform positioning of the work vehicle **100** by utilizing an RTK (Real Time Kinematic)-GNSS, for example. FIG. **11** is a conceptual diagram showing an example of the work vehicle **100** performing positioning based on the RTK-GNSS. In the positioning based on the RTK-GNSS, not only satellite signals transmitted from a plurality of GNSS satellites **50**, but also a correction signal that is transmitted from a reference station **60** is used. The reference station **60** may be disposed near the field where the work vehicle **100** performs tasked travel (e.g., at a position within **10** km of the work vehicle 100). The reference station **60** generates a correction signal of, for example, an RTCM format based on the satellite signals received from the plurality of GNSS satellites 50, and transmits the correction signal to the GNSS unit **110.** The RTK receiver **112**, which includes an antenna and a modem, receives the correction signal transmitted from the reference station **60**. Based on the correction signal, the processing circuit **116** of the GNSS unit **110** corrects the results of the positioning performed by use of the GNSS receiver **111**. Use of the RTK-GNSS enables positioning with an accuracy on the order of several centimeters of errors, for example. Positional information including latitude, longitude, and altitude information is acquired through the highly accurate positioning by the RTK-GNSS. The GNSS unit **110** calculates the position of the work vehicle **100** as frequently as, for example, one to ten times per second.

Note that the positioning method is not limited to being performed by use of an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System). In the case where positional information with the necessary accuracy can be obtained without the use of the correction signal transmitted from the reference station **60,** positional information may be generated without using the correction signal. In that case, the GNSS unit **110** does not need to include the RTK receiver **112.**

Even in the case where the RTK-GNSS is used, at a site where the correction signal from the reference station **60** cannot be acquired (e.g., on a road far from the field), the position of the work vehicle **100** is estimated by another method with no use of the signal from the RTK receiver **112.** For example, the position of the work vehicle **100** may be estimated by matching the data output from the LiDAR sensors **140A** and **140B** and/or the cameras **120** against a highly accurate environment map.

The GNSS unit **110** according to the present embodiment further includes the IMU **115.** The IMU **115** may include a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle **100**. Based not only on the satellite signals and the correction signal but also on a signal that is output from the IMU **115**, the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** Utilizing this signal that is output highly frequently, the processing circuit **116** allows the position and orientation of the work vehicle **100** to be measured more frequently (e.g., about 10 Hz or above). Instead of the IMU **115**, a 3-axis accelerometer and a 3-axis gyroscope may be separately provided. The IMU **115** may be provided as a separate device from the GNSS unit **110**.

The cameras **120** are imagers that image the surrounding environment of the work vehicle **100.** Each of the cameras **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle 100, the cameras **120** image the surrounding environment of the work vehicle **100**, and generate image data (e.g., motion picture data). The cameras **120** are able to capture motion pictures at a frame rate of 3 frames/second (fps: frames per second) or greater, for example. The images generated by the cameras **120** may be used by a remote supervisor to check the surrounding environment of the work vehicle **100** with the terminal device **400,** for example. The images generated by the cameras **120** may also be used for the purpose of positioning and/or detection of obstacles. A single camera **120** may be provided, or a plurality of cameras **120** may be provided at different positions on the work vehicle **100.** A visible camera(s) to generate visible light images and an infrared camera(s) to generate infrared images may be separately provided. Both of a visible camera(s) and an infrared camera(s) may be provided as cameras for generating images for monitoring purposes. The infrared camera(s) may also be used for detection of obstacles at nighttime. The camera(s) **120** may be a stereo camera. The stereo camera can be used to obtain a distance image indicating a distance distribution in the imaging range.

The obstacle sensors **130** detect objects existing in the surroundings of the work vehicle **100.** Each of the obstacle sensors **130** may include a laser scanner or an ultrasonic sonar, for example. When an object exists at a position within a predetermined distance from one of the obstacle sensors **130,** the obstacle sensor **130** outputs a signal indicating the presence of the obstacle. The plurality of obstacle sensors **130** may be provided at different positions on the work vehicle **100.** For example, a plurality of laser scanners and a plurality of ultrasonic sonars may be disposed at different positions on the work vehicle **100.** Providing such a great number of obstacle sensors **130** can reduce blind spots in monitoring obstacles in the surroundings of the work vehicle **100.**

The steering wheel sensor **152** measures the angle of rotation of the steering wheel of the work vehicle **100.** The steering angle sensor **154** measures the angle of turn of the front wheels **104F,** which are the wheels responsible for steering. Measurement values by the steering wheel sensor **152** and the steering angle sensor **154** are used for steering control by the controller **180.**

The wheel axis sensor **156** measures the rotational speed, i.e., the number of revolutions per unit time, of a wheel axis that is connected to the wheels **104.** The wheel axis sensor **156** may be a sensor including a magnetoresistive element (MR), a Hall generator, or an electromagnetic pickup, for example. The wheel axis sensor **156** outputs a numerical value indicating the number of revolutions per minute (unit: rpm) of the wheel axis, for example. The wheel axis sensor **156** is used to measure the speed of the work vehicle **100.**

The drive device **240** includes various types of devices required to cause the work vehicle **100** to travel and to drive the implement **300.** For example, the prime mover **102,** the transmission **103,** and the steering device **106,** and the like described above. The prime mover **102** may include an internal combustion engine such as, for example, a diesel engine. The drive device **240** may include an electric motor for traction instead of, or in addition to, the internal combustion engine.

The storage **170** includes one or more storage mediums such as a flash memory or a magnetic disc. The storage **170** stores various data that is generated by the GNSS unit **110,** the cameras **120,** the obstacle sensors **130,** the LiDAR sensor **140,** the sensors **150,** and the controller **180.** The data that is stored by the storage **170** may include map data on the environment where the work vehicle **100** travels (environment map), data on a target path for self-driving, and data indicating a positional relationship between the second LiDAR sensor **140B** and the marker member **148.** The environment map includes information on a plurality of fields where the work vehicle **100** performs agricultural work and roads around the fields. The environment map and the target path may be generated by a processor in the management device **600.** The controller **180** may have the function of generating or editing the environmental map and the target path. The storage **170** also stores a computer program(s) to cause each of the ECUs in the controller **180** to perform various operations described below. Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs include, for example, the ECU **181** for speed control, the ECU **182** for steering control, the ECU **183** for implement control, and the ECU **184** for self-driving control.

The ECU **181** controls the prime mover **102,** the transmission **103** and brakes included in the drive device **240,** thus controlling the speed of the work vehicle **100.**

The ECU **182** controls the hydraulic device or the electric motor included in the steering device **106** based on a measurement value of the steering wheel sensor **152,** thus controlling the steering of the work vehicle **100.**

In order to cause the implement **300** to perform a desired operation, the ECU **183** controls the operations of the three-point link, the PTO shaft and the like that are included in the linkage device **108.** Also, the ECU **183** generates a signal to control the operation of the implement **300,** and transmits this signal from the communicator **190** to the implement **300.**

The ECU **184** serves as the above processing device. The ECU **184** performs computation and control for achieving self-driving based on data output from the GNSS unit **110,** the cameras **120,** the obstacle sensors **130,** the first LiDAR sensor **140A,** the sensors **150,** and the second LiDAR sensor **140B.** For example, the ECU **184** specifies the position of the work vehicle **100** based on the data output from at least one of the GNSS unit **110,** the cameras **120** and the LiDAR sensors **140A and 140B.** In an environment in which the GNSS unit **110** can satisfactorily receive satellite signals, the ECU **184** may determine the position of the work vehicle **100** based only on the data output from the GNSS unit **110.** Conversely, in an environment in which there is an obstacle (e.g., a tree or construction) that blocks reception of satellite signals around the work vehicle **100,** the ECU **184** may estimate the position of the work vehicle **100** based on data output from the LiDAR sensors **140A** and **140B.** For example, the ECU **184** may perform localization on the work vehicle **100** by performing matching between data output from the LiDAR sensors **140A** and **140B** and an environmental map. During self-driving, the ECU **184** performs computation necessary for the work vehicle **100** to travel along a predetermined target path, based on the estimated position of the work vehicle **100.** The ECU **184** sends the ECU **181** a command to change the speed, and sends the ECU **182** a command to change the steering angle. In response to the command to change the speed, the ECU **181** controls the prime mover **102,** the transmission **103** or the brakes to change the speed of the work vehicle **100.** In response to the command to change the steering angle, the ECU **182** controls the steering device **106** to change the steering angle.

Through the actions of these ECUs, the controller **180** realizes self-driving. During self-driving, the controller **180** controls the drive device **240** based on the measured or estimated position of the work vehicle **100** and on the target path. As a result, the controller **180** can cause the work vehicle **100** to travel along the target path.

The plurality of ECUs included in the controller **180** can communicate with each other in accordance with a vehicle bus standard such as, for example, a CAN (Controller Area Network). Instead of the CAN, faster communication methods such as Automotive Ethernet (registered trademark) may be used. Although the ECUs **181** to **184** are illustrated as individual blocks in FIG. **10****,** the function of each of the ECU **181** to **184** may be implemented by a plurality of ECUs. Alternatively, an onboard computer that integrates the functions of at least some of the ECUs **181** to **184** may be provided. The controller **180** may include ECUs other than the ECUs **181** to **184,** and any number of ECUs may be provided in accordance with functionality. Each ECU includes one or more processors.

The communicator **190** is a device including a circuit communicating with the implement **300,** the terminal device **400** and the management device **600.** The communicator **190** includes circuitry to perform exchanges of signals complying with an ISOBUS standard such as ISOBUS-TIM, for example, between itself and the communicator **390** of the implement **300.** This allows the implement **300** to perform a desired operation, or allows information to be acquired from the implement **300.** The communicator **190** may also have the function of wirelessly communicating with the second LiDAR sensor **140B.** Communication conforming to any wireless communication standard, such as Wi-Fi (registered trademark), cellular mobile communication (e.g., 3G, 4G, or 5G), or Bluetooth (registered trademark), may be performed between the communicator **190** and the second LiDAR sensor **140B.** The communicator **190** may further include an antenna and a communication circuit to exchange signals via the network **80** with communicators of the terminal device **400** and the management device **600.** The network **80** may include a 3G, 4G, 5G, or any other cellular mobile communications network and the Internet, for example.

The operation terminal **200** is a terminal for the user to perform a manipulation related to the travel of the work vehicle **100** and the operation of the implement **300,** and is also referred to as a virtual terminal (VT). The operation terminal **200** may include a display device such as a touch screen panel, and/or one or more buttons. The display device may be a display such as a liquid crystal display or an organic light-emitting diode (OLED) display, for example. By manipulating the operation terminal **200,** the user can perform various manipulations, such as, for example, switching ON/OFF the self-driving mode, recording or editing an environment map, setting a target path, and switching ON/OFF the implement **300.** At least a portion of these manipulations may also be realized by manipulating the operation switches **210.** The operation terminal **200** may be configured so as to be detachable from the work vehicle **100.** A user who is at a remote place from the work vehicle **100** may manipulate the detached operation terminal **200** to control the operation of the work vehicle **100.** Instead of the operation terminal **200,** the user may manipulate a computer on which necessary application software is installed, for example, the terminal device **400,** to control the operation of the work vehicle **100.**

The drive device **340** in the implement **300** shown in FIG. **10** performs operations necessary for the implement **300** to perform predetermined work. The drive device **340** includes a device suitable for uses of the implement **300,** for example, a hydraulic device, an electric motor, a pump or the like. The controller **380** controls the operation of the drive device **340.** In response to a signal that is transmitted from the work vehicle **100** via the communicator **390,** the controller **380** causes the drive device **340** to perform various operations. Moreover, a signal that is in accordance with the state of the implement **300** can be transmitted from the communicator **390** to the work vehicle **100.**

Next, an example automatic traveling operation of the work vehicle **100** will be described.

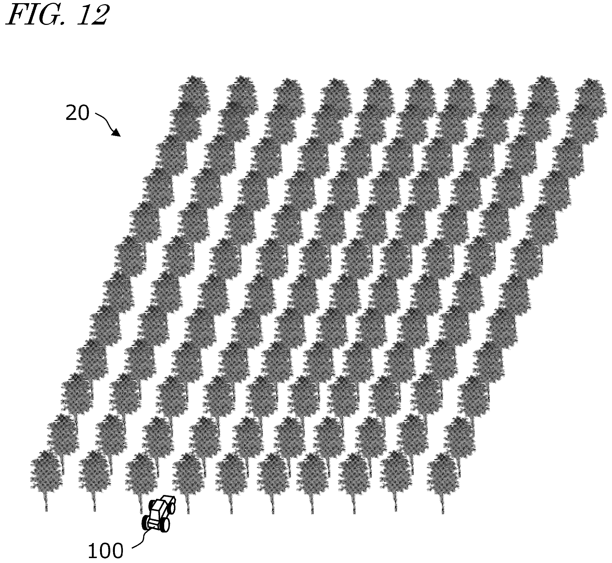

FIG. **12** is a diagram schematically illustrating an example of an environment in which the work vehicle **100** travels. In this example, the work vehicle **100** performs predetermined work (e.g., mowing and pest controlling) using the implement **300** while traveling between a plurality of rows **20** of trees in an orchard (e.g., a grape orchard). In orchards, it is difficult for the work vehicle **100** to perform automatic traveling using GNSS because the work vehicle **100** is hidden by branches and leaves above the work vehicle **100.** In such an environment, the ECU **184** performs localization on the work vehicle **100** based on data from the first LiDAR sensor **140A** and the second LiDAR sensor **140B.**

An example operation of the work vehicle **100** will be specifically described below. The ECU **184** initially generates an environmental map indicating the distribution of trunks of the tree rows **20** in all or a portion of an orchard by utilizing sensor data output from the LiDAR sensors **140A** and **140B,** and stores the environmental map into the storage **170.** The environmental map generation is executed by repeatedly performing localization and generation of a local map. The ECU **184** repeatedly performs the operation of, based on sensor data repeatedly output from the LiDAR sensors **140A** and **140B** when the work vehicle **100** is traveling, detecting tree rows in an environment around the work vehicle **100** while performing localization, generating a local map indicating the distribution of the detected tree rows, and storing the local map into the storage **170.** The ECU **184** generates an environmental map by joining together local maps generated while the work vehicle **100** is traveling in all or a part of an orchard. The environmental map is data in which the distribution of the tree rows **20** in the environment is stored in a form with which the tree rows **20** can be distinguished from other objects. Thus, in this embodiment, the tree rows **20** may be used as a landmark for SLAM.

After an environmental map has been generated, the work vehicle **100** is allowed to automatically travel. The ECU **184** estimates the position of the work vehicle **100** by detecting the tree rows **20** in the surrounding environment based on sensor data repeatedly output from the LiDAR sensors **140A** and **140B** when the work vehicle **100** is traveling, and performing matching between the detected tree rows **20** and the environmental map. The ECU **184** controls the traveling of the work vehicle **100** based the estimated position of the work vehicle **100.** For example, if the work vehicle **100** deviates from a target path set between two adjacent tree rows, the ECU **184** performs control so as to cause the ECU **182** to adjust the steering of the work vehicle **100** so that the work vehicle **100** approaches the target path. Such steering control may be performed based on the orientation of the work vehicle **100** in addition to the position of the work vehicle **100.**

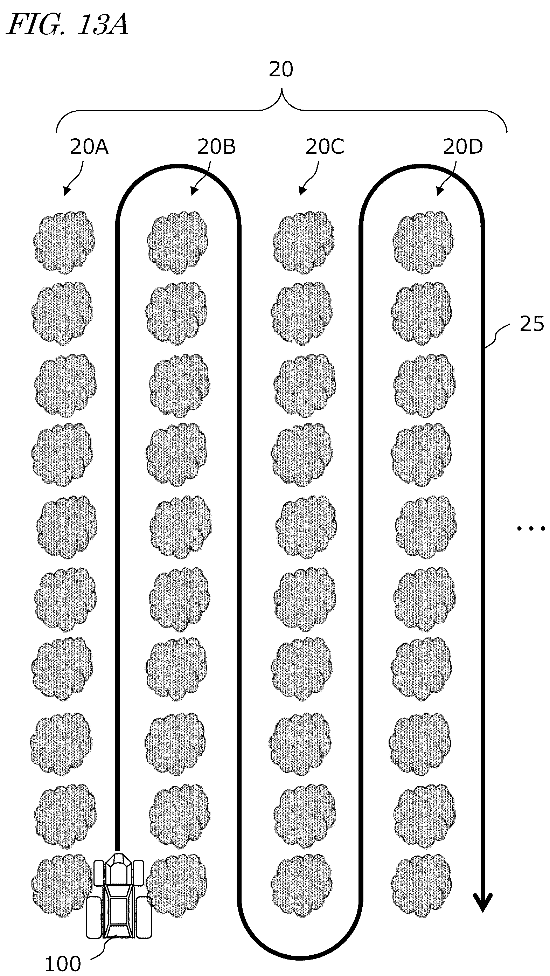

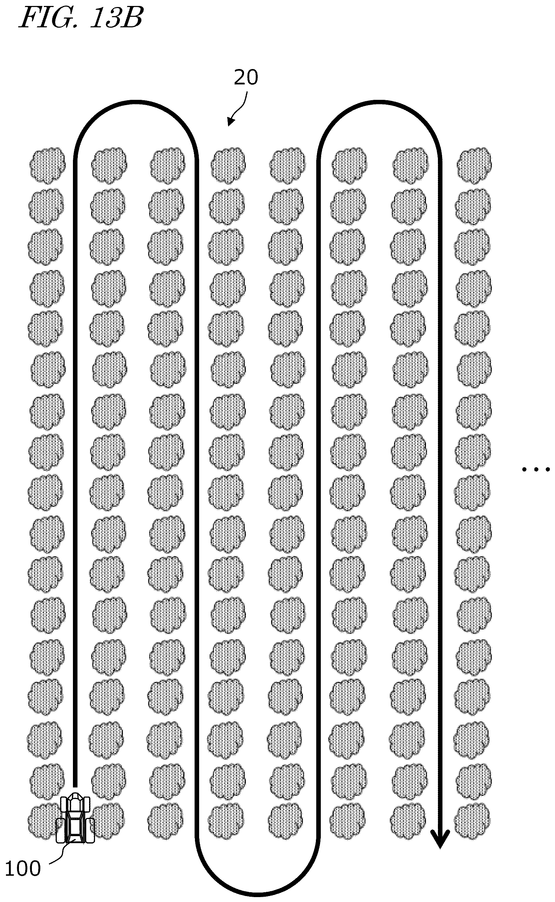

FIG. **13A** is a diagram schematically illustrating an example travel path of the work vehicle **100.** For example, the work vehicle **100** travels between a plurality of tree rows **20** in an orchard along a path **25** indicated by an arrow in FIG. **13A****.** Although FIG. **13A** illustrates line segments included in the path **25** in straight line, paths along which the work vehicle **100** actually travels may include winding portions. Here, the plurality of tree rows **20** are successively ordered from an end like a first tree row **20A,** a second tree row **20B,** a third tree row **20C,** a fourth tree row **20D,** and so on. In the example of FIG. **13A****,** the work vehicle **100** initially travels between the first tree row **20A** and the second tree row **20B,** and after that, turns to travel between the second tree row **20B** and the third tree row **20C** in the opposite direction. After having traveled between the second tree row **20B** and the third tree row **20C,** the work vehicle **100** turns to travel between the third tree row **20C** and the fourth tree row **20D.** Thereafter, by repeatedly performing a similar operation, the work vehicle **100** travels to the end of the path **25** between the final two tree rows. It should be noted that as illustrated in FIG. **13B****,** if adjacent tree rows are separated by a short distance, the work vehicle **100** may travel along every other row. In that case, after having traveled between the final two tree rows, the work vehicle **100** travels along paths between tree rows on which the work vehicle **100** has not yet traveled, along every other row. The work vehicle **100** automatically performs such traveling while performing localization using the LiDAR sensors **140A** and **140B.** It should be noted that when the GNSS unit **110** can receive GNSS signals, positioning may be performed based on the GNSS signals. For example, in the case of the path **25** illustrated in FIGS. **13A** and **13B****,** when the work vehicle **100** changes directions, the work vehicle **100** is not hidden by leaves that block GNSS signals, and therefore, positioning can be performed based on GNSS signals.

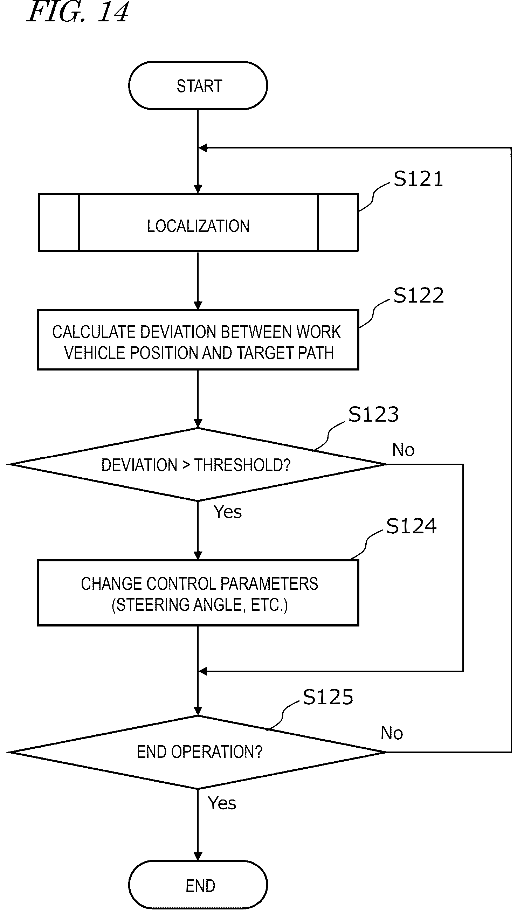

FIG. **14** is a flowchart showing an example operation of steering control to be performed by the controller **180** during self-driving. During travel of the work vehicle **100,** the controller **180** performs automatic steering by performing the operation from steps **S121** to **S125** shown in FIG. **14****.** The speed of the work vehicle **100** may be maintained at a previously-set speed, for example. The controller **180** performs localization on the work vehicle **100** based on data output from the GNSS unit **110** or the LiDAR sensors **140A** and **140B** while the work vehicle **100** is traveling (step **S121).** A specific example process of localization is described below. Next, the controller **180** calculates a deviation of the estimated position of the work vehicle **100** from a target path (step **S122).** The deviation represents the distance between the position of the work vehicle **100** and the target path at that moment. The controller **180** determines whether the calculated deviation in position exceeds the previously-set threshold or not (step **S123).** If the deviation exceeds the threshold, the controller **180** changes a control parameter of the steering device included in the drive device **240** so as to reduce the deviation, thus changing the steering angle (step **S124).** If the deviation does not exceed the threshold at step **S123,** the operation of step **S124** is omitted. At the following step **S125,** the controller **180** determines whether a command to end the operation has been received or not. The command to end the operation may be given when the user has instructed that self-driving be suspended through remote manipulations, or when the work vehicle **100** has arrived at the destination, for example. If the command to end the operation has not been given, the control returns to step **S121** and the controller **180** performs substantially the same operation based on a newly measured position of the work vehicle **100.** The controller **180** repeats the operation from steps **S121** to **S125** until a command to end the operation is given. The aforementioned operation is executed by the ECUs **182** and **184** in the controller **180.**

In the example shown in FIG. **14****,** the controller **180** controls the drive device **240** based only on the deviation between the position of the work vehicle **100** and the target path. Alternatively, a deviation in terms of directions may further be considered in the control. For example, when a directional deviation exceeds a previously-set threshold, where the directional deviation is an angle difference between the orientation of the work vehicle **100** estimated by the above localization process, and the direction of the target path, the controller **180** may change the control parameter of the steering device of the drive device **240** (e.g., steering angle) in accordance with the deviation.

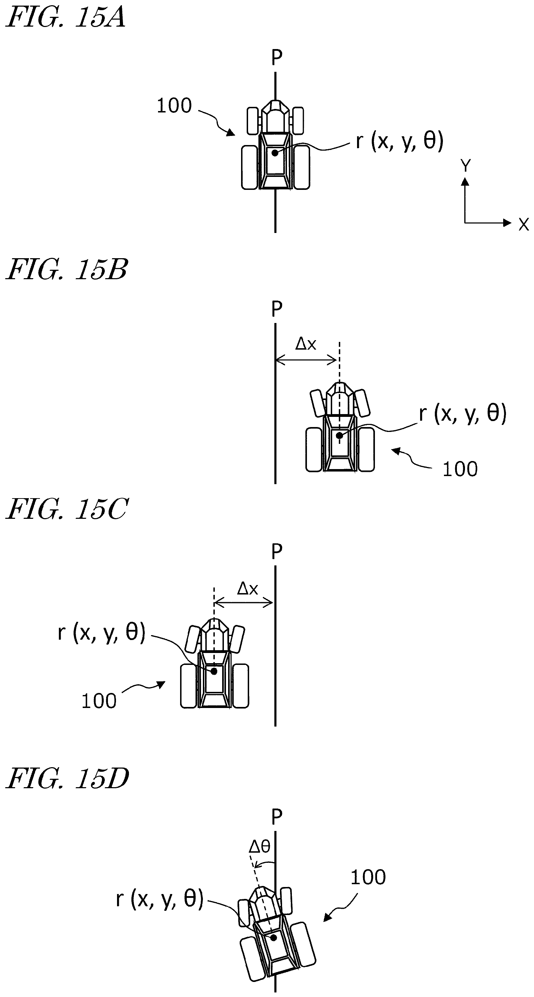

Hereinafter, with reference to FIGS. **15A** to **15D****,** an example of steering control by the controller **180** will be described more specifically.

FIG. **15A** is a diagram showing an example of the work vehicle **100** traveling along a target path **P.** FIG. **15B** is a diagram showing an example of the work vehicle **100** at a position which is shifted rightward from the target path **P.** FIG. **15C** is a diagram showing an example of the work vehicle **100** at a position which is shifted leftward from the target path **P.** FIG. **15D** is a diagram showing an example of the work vehicle **100** oriented in an inclined direction with respect to the target path **P.** In these figures, the pose, i.e., the position and orientation, of the work vehicle **100** as measured by the GNSS unit **110** is expressed as r(x,y,θ). Herein, (x,y) are coordinates representing the position of a reference point on the work vehicle **100** in an XY coordinate system, which is a two-dimensional coordinate system fixed to the globe. In the examples shown in FIGS. **15A** to **15D****,** the reference point on the work vehicle **100** is at a position, on the cabin, where a GNSS antenna is disposed, but the reference point may be at any arbitrary position. θ is an angle representing the measured orientation of the work vehicle **100.** Although the target path **P** is shown parallel to the Y axis in the examples illustrated in these figures, the target path **P** may not necessarily be parallel to the Y axis, in general.

As shown in FIG. **15A****,** in the case where the position and orientation of the work vehicle **100** are not deviated from the target path **P,** the controller **180** maintains the steering angle and speed of the work vehicle **100** without changing them.

As shown in FIG. **15B****,** when the position of the work vehicle **100** is shifted rightward from the target path **P,** the controller **180** changes the steering angle so that the traveling direction of the work vehicle **100** will be inclined leftward, thus bringing the work vehicle **100** closer to the path **P.** At this point, not only the steering angle but also the speed may be changed. The magnitude of the steering angle may be adjusted in accordance with the magnitude of a positional deviation Δx, for example.

As shown in FIG. **15C****,** when the position of the work vehicle **100** is shifted leftward from the target path **P,** the controller **180** changes the steering angle so that the traveling direction of the work vehicle **100** will be inclined rightward, thus bringing the work vehicle **100** closer to the path **P.** In this case, too, not only the steering angle but also the speed may be changed. The amount of change of the steering angle may be adjusted in accordance with the magnitude of the positional deviation Δx, for example.

As shown in FIG. **15D****,** in the case where the position of the work vehicle **100** is not considerably deviated from the target path **P** but its orientation is nonetheless different from the direction of the target path **P,** the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the work vehicle **100** to return to the path **P,** so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the work vehicle **100,** control techniques such as PID control or MPC (Model Predictive Control) may be applied. Applying these control techniques will make for smoothness of the control of bringing the work vehicle **100** closer to the target path **P.**

Note that, when an obstacle is detected by one or more obstacle sensors **130** during travel, the controller **180** halts the work vehicle **100.** At this point, the controller **180** may cause the buzzer **220** to present an alarm sound or may transmit an alert signal to the terminal device **400.** In the case where the obstacle is avoidable, the controller **180** may control the drive device **240** such that the obstacle is avoided.

Next, a specific example of the localization process of step **S121** in FIG. **14** will be described.

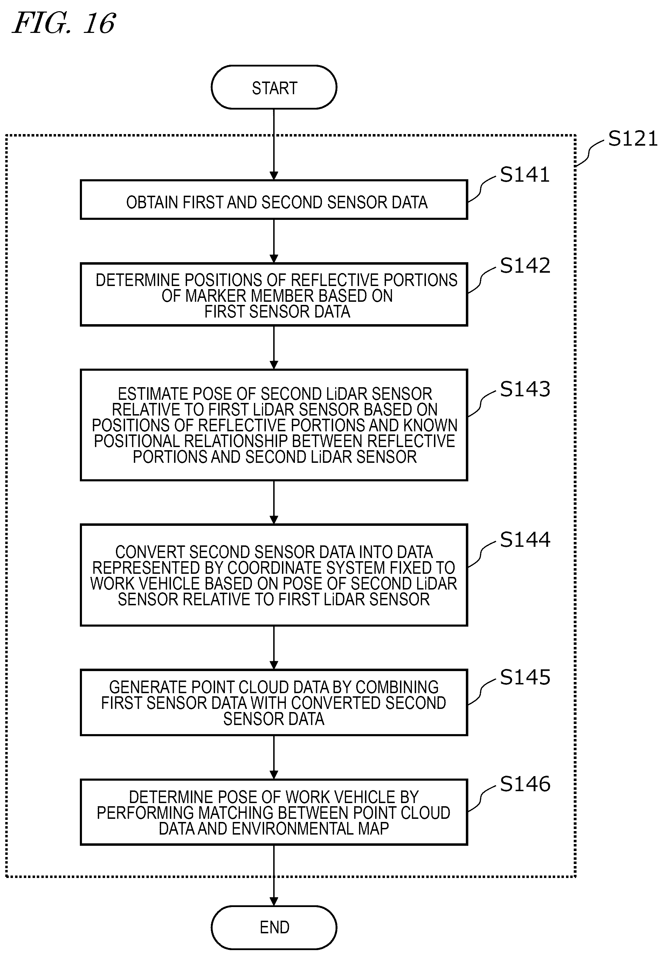

FIG. **16** is a flowchart illustrating a specific example of the process of step **S121** in FIG. **14****.** Here, an example of the localization process based on the first sensor data output from the first LiDAR sensor **140A** and the second sensor data output from the second LiDAR sensor **140B** will be described. In the example of FIG. **16****,** step **S121** includes the processes of steps **S141 to S146.**

The ECU **184** (processing device) of the controller **180** initially obtains the first sensor data and the second sensor data (step **S141).** Next, the ECU **184** determines the positions of a plurality of reflective portions of the marker member **148** based on the first sensor data (step **S142).** The plurality of reflective portions have a light reflectance higher than that of the other portions, including, for example, the reflective portions **148a, 148b,** and **148c** illustrated in FIG. **2** or **4****.** The ECU **184** estimates the pose of the second LiDAR sensor **140B** relative to the first LiDAR sensor **140A** based on the positions of the plurality of reflective portions of the marker member **148,** and a known positional relationship between the plurality of reflective portions and the second LiDAR sensor **140B** (step **S143).** Next, the ECU **184** converts the second sensor data into data in a coordinate system fixed to the work vehicle **100** based on the pose of the second LiDAR sensor **140B** relative to the first LiDAR sensor **140A** (step **S144).** Here, the coordinate system fixed to the work vehicle **100** may, for example, be the same as that set for the first LiDAR sensor **140A.** The ECU **184** combines the first sensor data and the converted second sensor data to generate point cloud data (step **S145).** At this time, the ECU **184** may exclude, from the first sensor data, data of points in regions corresponding to the implement **300,** the second LiDAR sensor **140B,** and the marker member **148,** before combining the first sensor data and the second sensor data. By performing such a process, data of points not required for localization can be prevented from being included in the point cloud data. It should be noted that the ECU **184** may generate point cloud data only based on the second sensor data that has been subjected to coordinate conversion. Next, the ECU **184** performs matching between the generated point cloud data and an environmental map stored in the storage **170,** to determine the pose of the work vehicle **100** (step **S146).**

By the above operation, the ECU **184** can perform localization on the work vehicle **100.** In this embodiment, the second LiDAR sensor **140B** and the marker member **148** are mounted on the implement **300,** separately from the first LiDAR sensor **140A** provided on the work vehicle **100.** The pose of the second LiDAR sensor **140B** can be estimated based on the first sensor data obtained by the first LiDAR **140A** sensing the marker member **148.** As a result, the second sensor data can be converted into data in a coordinate system fixed to the work vehicle **100,** and the data can be used in localization. By such an operation, localization can be performed even when a large-size implement **300** is attached to the work vehicle **100.**

It should be noted that the above process is not limited to localization, and may be applied to the case in which obstacle detection is performed using the LiDAR sensors **140A** and **140B.** Although in this embodiment the LiDAR sensors **140A** and **140B** are used, sensors that measure distances using other techniques may be used. For example, techniques similar to the example in which the camera **120** of FIG. **5** is used or the plurality of GNN receivers **110A** and **110B** of FIG. 7 are used may be applied. Instead of LiDAR sensors, other range sensors such as a stereo camera and ToF camera may be used.

In the foregoing embodiments, an example in which a sensing system is applied to the agricultural work vehicle **100** such as a tractor has been described. The sensing system is not limited to the agricultural work vehicle **100,** and may be used in work vehicles for other applications such as civil engineering work, construction work, or snow removal work.

As described above, the present disclosure includes systems and methods described in the following items.

### [Item 1]

A sensing system comprising:
a first range sensor mounted on a work vehicle;
a second range sensor mounted on an implement connected to the work vehicle;
a marker member located in a sensing range of the first range sensor; and
a processing device,
wherein
the processing device is configured to:
estimate a pose of the second range sensor relative to the first range sensor based on first sensor data generated by the first range sensor sensing a region including the marker member; and
output data indicating the estimated pose.

### [Item 2]

The sensing system according to item 1, wherein the second range sensor includes a mounting device that mounts the second range sensor on the implement, and is external to the implement.

### [Item 3]

The sensing system according to item 1 or 2, wherein the marker member is attached to the second range sensor.

### [Item 4]

The sensing system according to any of items 1 to 3, wherein the processing device is configured to estimate the pose of the second range sensor relative to the first range sensor based on the first sensor data, and information indicating a relationship in position and orientation between the second range sensor and the marker member.

### [Item 5]

The sensing system according to any of items 1 to 4, wherein the processing device is configured to convert second sensor data output from the second range sensor into data represented by a coordinate system fixed to the work vehicle based on the estimated pose, and output the data.

### [Item 6]

The sensing system according to any of items 1 to 5, wherein
the first range sensor includes a first LiDAR sensor to output the first sensor data,
the second range sensor includes a second LiDAR sensor to output second sensor data,
the marker member includes one or more reflective portions having a higher reflectance with respect to light emitted from the first LiDAR sensor than that of the other portion of the marker member, and
the processing device is configured to estimate the pose of the second range sensor relative to the first range sensor based on a position and/or shape of the one or more reflective portions.

### [Item 7]

The sensing system according to item 6, wherein the processing device is configured to convert the second sensor data into data represented by a coordinate system fixed to the work vehicle based on the estimated pose, and generate and output point cloud data based on the first sensor data and the converted second sensor data.

### [Item 8]

The sensing system according to item 7, wherein the processing device is configured to combine data obtained by excluding, from the first sensor data, data of a region corresponding to the implement and the second range sensor, with the converted second sensor data, to generate the point cloud data.

### [Item 9]

The sensing system according to any of items 1 to 5, wherein
the first range sensor includes an image sensor to output image data as the first sensor data, and
the processing device is configured to estimate the pose of the second range sensor relative to the first range sensor based on a luminance distribution or color distribution of a region corresponding to the marker member in an image indicated by the first sensor data.

### [Item 10]

The sensing system according to any of items 1 to 9, further comprising:
a storage to store an environmental map,
   wherein
the processing device is configured to:
   convert second sensor data output from the second range sensor into data represented by a coordinate system fixed to the work vehicle, based on the estimated pose;
   generate point cloud data indicating a distribution of objects on the ground around the work vehicle based on the converted second sensor data; and
   estimate a position of the work vehicle by performing matching between the point cloud data and the environmental map.

### [Item 11]

The sensing system according to any of items 1 to 10, wherein
the implement is connected to a front portion of the work vehicle, and
the first range sensor is configured to sense at least an area in front of the work vehicle.

### [Item 12]

An agricultural machine comprising the sensing system according to any of items 1 to 11.

### [Item 13]

A sensing device that is used as the second range sensor in the sensing system according to any of items 1 to 11, the sensing device comprising:
a mounting device configured to mount the sensing device on the implement,
   wherein
the sensing device is external to the implement.

### [Item 14]

A sensing system comprising:
a first sensing device mounted on a work vehicle;
a second sensing device mounted on an implement connected to the work vehicle;
a marker member mounted on the implement;
a storage configured to store data indicating a relationship in position and orientation between the second sensing device and the marker member; and
a processing device,
   wherein
the second sensing device includes a LiDAR sensor,
the processing device is configured to
estimate a pose of the LiDAR sensor relative to the first sensing device based on first sensor data generated by the first sensing device sensing a region including the marker member, and the data stored in the storage, and
output the estimated pose.

### [Item 15]

A sensing system comprising:
a first GNSS receiver mounted on a work vehicle;
a LiDAR sensor mounted on an implement connected to the work vehicle;
at least three second GNN receivers mounted on the implement; and
a processing device,
wherein
the processing device is configured to
estimate a pose of the second sensing device relative to the first sensing device based on a signal received by the first GNSS receiver and signals received by the at least three second GNN receivers, and
output data indicating the estimated pose.

### INDUSTRIAL APPLICABILITY

The technique of the present disclosure is applicable to a work vehicle that travels while performing work using an implement. For example, the technique of the present disclosure is applicable to a work vehicle such as a tractor that automatically travels while performing agricultural work with an implement attached to a front or rear portion thereof.

### REFERENCE SIGNS LIST

**100:** work vehicle, **101:** vehicle body, **102:** engine, **103:** transmission, **104:** wheels, **105:** cabin, **106:** steering device, **107:** driver's seat, **108:** coupling device, **110:** GNSS unit, **110A, 110B, 111:** GNN receiver, **112:** RTK receiver, **115:** inertial measurement unit, **116:** processing circuit, **120:** camera, **130:** obstacle sensor, **140:** LiDAR sensors, **140A:** first LiDAR sensor, **140B:** second LiDAR sensor, **148:** marker member, **149:** mounting device, **150:** sensors, **152:** steering wheel sensor, **154:** steering angle sensor, **156:** axle sensor, **160:** control system, **170:** storage, **180:** controller, **181-184:** ECU, **190:** communicator, **200:** operation terminal, **210:** operation switches, **240:** drive device, **250:** processing device, **300:** implement, **340:** drive device, **380:** controller, **390:** communicator

## Claims

1. A sensing system comprising:
a first range sensor mounted on a work vehicle;
a second range sensor mounted on an implement connected to the work vehicle;
a marker member located in a sensing range of the first range sensor; and
a processing device,
wherein
the processing device is configured to:
estimate a pose of the second range sensor relative to the first range sensor based on first sensor data generated by the first range sensor sensing a region including the marker member; and
output data indicating the estimated pose.

2. The sensing system according to claim 1, wherein the second range sensor includes a mounting device configured to mount the second range sensor on the implement, and is external to the implement.

3. The sensing system according to claim 1 or 2, wherein the marker member is attached to the second range sensor.

4. The sensing system according to claim 1 or 2, wherein the processing device is configured to estimate the pose of the second range sensor relative to the first range sensor based on the first sensor data, and information indicating a relationship in position and orientation between the second range sensor and the marker member.

5. The sensing system according to claim 1 or 2, wherein the processing device is configured to convert second sensor data output from the second range sensor into data represented by a coordinate system fixed to the work vehicle based on the estimated pose, and output the data.

6. The sensing system according to claim 1 or 2, wherein
the first range sensor includes a first LiDAR sensor to output the first sensor data,
the second range sensor includes a second LiDAR sensor to output second sensor data,
the marker member includes one or more reflective portions having a higher reflectance with respect to light emitted from the first LiDAR sensor than that of the other portion of the marker member, and
the processing device is configured to estimate the pose of the second range sensor relative to the first range sensor based on a position and/or shape of the one or more reflective portions.

7. The sensing system according to claim 6, wherein the processing device is configured to convert the second sensor data into data represented by a coordinate system fixed to the work vehicle based on the estimated pose, and generate and output point cloud data based on the first sensor data and the converted second sensor data.

8. The sensing system according to claim 7, wherein the processing device is configured to combine data obtained by excluding, from the first sensor data, data of a region corresponding to the implement and the second range sensor, with the converted second sensor data, to generate the point cloud data.

9. The sensing system according to claim 1 or 2, wherein
the first range sensor includes an image sensor to output image data as the first sensor data, and
the processing device is configured to estimate the pose of the second range sensor relative to the first range sensor based on a luminance distribution or color distribution of a region corresponding to the marker member in an image indicated by the first sensor data.

10. The sensing system according to claim 1 or 2, further comprising:
a storage to store an environmental map,
wherein
the processing device is configured to:
convert second sensor data output from the second range sensor into data represented by a coordinate system fixed to the work vehicle, based on the estimated pose,
generate point cloud data indicating a distribution of objects on the ground around the work vehicle based on the converted second sensor data; and
estimate a position of the work vehicle by performing matching between the point cloud data and the environmental map.

11. The sensing system according to claim 1 or 2, wherein
the implement is connected to a front portion of the work vehicle, and
the first range sensor is configured to sense at least an area in front of the work vehicle.

12. An agricultural machine comprising the sensing system according to claim 1.

13. A sensing device that is used as the second range sensor in the sensing system according to claim 1, the sensing device comprising:
a mounting device configured to mount the sensing device on the implement,
wherein
the sensing device is external to the implement.
